# EUROPEAN PATENT APPLICATION

(11) **EP 4 814 300 A1**
(43) Date of publication of application: **30.09.2026**
(21) Application number: 25382307.4
(22) Date of filing: 28.03.2025
(51) Int. Cl.: F03D 7/02

(54) **WIND TURBINE PITCH AND YAW CONTROL**

(71) Applicant: Nordex Energy Spain, S.A.U., 31395 Barasoain (Navarra) (ES)
(72) Inventor: ARLABÁN GABEIRAS, Teresa, 31395 Barasoain (ES)
(74) Representative: Elion IP, S.L.

(57) **Abstract**

A method for reducing vibrations of a wind turbine. The wind turbine comprises a wind rotor with at least a first rotor blade and a second rotor blade. The method comprises adjusting a pitch angle of at least one rotor blade of the first and second rotor blades so that the pitch angle of the first rotor blade and the pitch angle of the second rotor blade differ by at least 30 degrees, the adjusting of the pitch angle occurring when the wind turbine is in a state where yawing of the wind rotor is possible. And the method comprises adjusting a yaw angle of the wind rotor to a preferred yaw position, the yaw angle being at least partially adjusted during or after the adjusting of the pitch angle. Also, a data processing device or system, a control system, a wind turbine, a wind farm and a computer program.

## Description

### TECHNICAL FIELD

The present disclosure relates to the field of wind turbines. More particularly, the present disclosure relates to, but is not limited to, control systems, wind turbines and methods associated therewith for reducing vibrations on components of one or more wind turbines, in particular in some situations.

### BACKGROUND

Wind turbine components, during normal operation of the wind turbine, are subjected to mechanical stress. In some occasions, there is uneven loading on the wind turbine, which leads to accelerated wear and tear on key components such as bearings, gearboxes, and rotor hubs. Accordingly, there may also be times during which it could be convenient to have wind turbines oriented in a particular way to reduce mechanical stress, or to avoid risky conditions when maintenance may be conducted or during commissioning of wind turbines.

Also, wind turbines in presence of wind gusts can be subjected to unpredictable and varying forces on turbine blades that are not properly oriented. Over time, stress increases the likelihood of mechanical failures, requiring more frequent maintenance and shortening the lifespan of wind turbines.

Unproperly-oriented wind turbines, depending on wind inflow, can also pose safety risks. The loads exerted on the wind turbines may cause vibration on rotor blades of the wind turbines potentially leading to oscillations due to, e.g., vortex shedding. Depending on the frequency and intensity of the oscillations, the wind turbine may be subjected to high mechanical stress that eventually causes failures.

When there are failures, the operation of wind turbines must generally be halted at least for assessment of the damages that have taken place. Usually, the existence of damages requires scheduling of maintenance tasks that, in addition to being expensive, oftentimes take a long time and, therefore, the concerned wind turbines are halted for long periods of time. Not only such wind turbines stop generating electric power, but they lose part of their useful life while being halted as wind farms are usually decommissioned or replaced in full at once.

Moreover, towers of wind turbine are also affected by the vibrations of rotor blades as such undesirable phenomena, especially when there are oscillations, cause uneven loading on the towers. Uneven loading negatively affects structural integrity of the towers.

### SUMMARY

The following aspects are intended to at least reduce vibrations of a wind turbine that includes a wind rotor including at least a first rotor blade and a second rotor blade.

An aspect of the disclosure relates to a method that includes adjusting a pitch angle of at least one rotor blade of the first and second rotor blades so that the pitch angle of the first rotor blade and the pitch angle of the second rotor blade differ by at least 30 degrees. In the method, the adjusting of the pitch angle occurs when the wind turbine is in a state where yawing of the wind rotor is possible. Also, the method includes adjusting a yaw angle of the wind rotor to a preferred yaw position. The yaw angle is at least partially adjusted during or after the adjusting of the pitch angle of the at least one rotor blade.

Another aspect of the disclosure relates to a control system at least including a pitch maneuver and a yaw maneuver. The pitch maneuver includes adjusting a pitch angle of at least one rotor blade of a wind rotor of the wind turbine so that the pitch angle of first rotor blade and the pitch angle of the second rotor blade differ by at least 30 degrees. The adjusting of the pitch angle occurs when the wind turbine is in a state where yawing of the wind rotor is possible. The yaw maneuver includes adjusting a yaw angle of the wind rotor of the wind turbine to a preferred yaw position. The yaw maneuver is initiated during or after the pitch maneuver.

Another aspect of the disclosure relates to a wind turbine that includes a wind rotor including at least a first rotor blade and a second rotor blade, each of the rotor blades being rotatable about a pitch axis for adjustment of its respective pitch angle. The wind turbine also includes a pitch drive system configured to adjust the pitch angles of each rotor blade. The wind turbine also includes a wind turbine controller configured to control the pitch drive system to make pitch angle adjustments including to adjust a pitch angle of at least one of the first and second rotor blades so that the pitch angle of the first rotor blade and the pitch angle of the second rotor blade differ by at least 30 degrees when the wind turbine is in a state where yawing of the wind rotor is possible, and the wind rotor has a yaw angle thereof adjusted to a preferred yaw position at least partially occurring during or after the pitch angle adjustments.

Another aspect of the disclosure relates to a wind farm including a plurality of wind turbines. Each wind turbine of the plurality of wind turbines includes a wind rotor including at least a first rotor blade and a second rotor blade, each of the rotor blades being rotatable about a pitch axis for adjustment of its respective pitch angle. Each wind turbine also includes a pitch drive system configured to adjust the pitch angles of each rotor blade. Each wind turbine also includes a wind turbine controller configured to control the pitch drive system to make pitch angle adjustments including to adjust a pitch angle of at least one of the first and second rotor blades so that the pitch angle of the first rotor blade and the pitch angle of the second rotor blade differ by at least 30 degrees when the wind turbine is in a state where yawing of the wind rotor is possible, and the wind rotor has a yaw angle thereof adjusted to a preferred yaw position at least partially occurring during or after the pitch angle adjustments.

Another aspect of the disclosure relates to a non-transitory computer-readable storage medium including instructions, or a computer program including instructions, the instructions at least causing one or more computing devices: to adjust a pitch angle of at least one rotor blade of the first and second rotor blades so that the pitch angle of the first rotor blade and the pitch angle of the second rotor blade differ by at least 30 degrees, the adjusting of the pitch angle occurring when the wind turbine is in a state where yawing of the wind rotor is possible; and to adjust a yaw angle of the wind rotor to a preferred yaw position, the adjusting of the yaw angle at least partially occurring during or after the adjusting of the pitch angle.

Additional advantages and features of the present disclosure will become apparent from the detailed description that follows.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings include the following figures:
Figure 1 shows a wind turbine in accordance with some examples.
Figure 2 shows a control system for at least one wind turbine in accordance with some examples.
Figure 3 shows a method in accordance with some examples.
Figure 4 shows a method in accordance with some examples.
Figure 5 shows pitch and yaw maneuvers of at least one wind turbine in accordance with some examples.
Figure 6 shows pitch and yaw maneuvers of at least one wind turbine in accordance with some examples.
Figure 7 shows pitch and yaw maneuvers of at least one wind turbine in accordance with some examples.

### DETAILED DESCRIPTION

The different aspects and examples described in the foregoing and down below may be combined with one another unless indicated otherwise. For the sake of clarity only, in the following examples reference will be made to a method, but it will be understood that the examples are likewise applicable to the other aspects (i.e., control system, wind turbine, wind farm, non-transitory computer-readable storage medium, computer program) unless indicated otherwise.

As part of the operation of at least one wind turbine, a pitch angle of at least one rotor blade of a wind rotor of the wind turbine or turbines is adjusted at least during times in which the respective wind turbine or turbines is/are in a state in which yawing of the respective wind rotor is possible. The pitching, i.e., adjustment of the pitch angle, takes place regardless of whether the rotor is yawed, or not, during the time that the at least one wind turbine is in said state.

The pitch angle of at least one rotor blade of, e.g., first and second rotor blades of the wind rotor of a given wind turbine, or turbines, is adjusted to make the pitch angles of the, e.g., first and second rotor blades, to differ by at least 30 degrees in absolute value. Accordingly, after conducting the pitch angle adjustment, a first pitch angle of at least one of the rotor blades (e.g., the first rotor blade, the second rotor blade) is greater than or equal to a second pitch angle of the at least one other rotor blade (e.g., the second rotor blade, the first rotor blade) plus 30 degrees, i.e., β₁ ≥ β₂ + 30°, where β₁ and β₂ are the first and second pitch angles with respect to a same reference, e.g., a same reference axis or plane such as, for example but without limitation, a longitudinal axis of a tower of the respective wind turbine, a plane containing the longitudinal axis, or a horizontal plane, to name a few.

The adjustment of the pitch angle includes, in some examples, adjusting the pitch angle of just one of the rotor blades. Hence, the pitch angle of at least one of the rotor blades is maintained at its current value, and the pitch angle of at least one other of the rotor blades is adjusted to fulfill β₁ ≥ β₂ + 30°. In some other examples, the adjustment includes adjusting the pitch angle of two or more rotor blades. That is to say, adjusting the pitch angle of the at least one rotor blade includes adjusting a first pitch angle of the first rotor blade and a second pitch angle of the second rotor blade so that the first and second pitch angles differ by at least 30 degrees.

Furthermore, as also part of the operation of the at least one wind turbine in some examples, a yaw angle of the wind rotor of the at least one wind turbine is adjusted, which is conducted by yawing the wind rotor. The adjustment of the yaw angle at least partially occurs during or after adjusting the pitch angle of the at least one rotor blade of the same wind turbine.

Adjustment of the pitch angle to a configuration intended to reduce or minimize vibrations is carried out avoiding situations in which the components of the wind turbine or the wind turbine itself may be damaged or out of order, or even when there is no autonomous or independent electrical energy supply (e.g., at least one battery) and there is no electric power available for carrying out the adjustment. By the same token, adjustment of the pitch angle is possible, in some cases, even when there is such autonomous or independent electrical energy supply but it does not have enough energy for a continuous yaw angle adjustment. The whole operation of the wind turbine is more cost-effective as fewer or no components are necessary for adjusting the yaw angle in situations with no electric power available, and the maintenance tasks for the wind turbine are simpler and, in some cases, taking place less frequently.

The preferred yaw position attempts to reduce or minimize vibrations of the wind turbine in time periods during which the wind turbine is in a state not allowing the wind rotor to yaw. To this end, the wind turbine is configured to avoid reaching a situation in which the wind turbine or turbines are not properly yawed by the time the turbine or turbines may be in a state that prevents yawing of the wind rotor.

In the context of the present disclosure, by state in which yawing of a wind rotor is possible it is preferably meant that upon issuance of a command to adjust the yaw angle of the wind rotor, the wind rotor conducts yawing. Impossibility or unavailability of yawing the wind rotor system may be due to any cause that forbids yawing, for example, grid loss, lack of autonomous or independent electrical energy supply, components of a yaw system being damaged or out of order, operation of the yaw system being halted due to risk of fatal failure, ice formation on rotor blades, ice formation on the yaw system, commissioning of the at least one wind turbine with no connection to grid, etc. In this sense, in some examples, wind turbines are not provided with means for allowing yawing of the wind rotor when electric power is not available from the grid or from production by the wind turbines.

In some examples, adjustment of the yaw angle takes place fully while adjusting the pitch angle.

A yaw maneuver is simultaneous with a pitch maneuver. Although there is simultaneity between the maneuvers, the pitch maneuver has, in some examples, a duration longer than the yaw maneuver. The yaw maneuver may thus start simultaneously with the start of the pitch maneuver or after the pitch maneuver has been started.

In some examples, adjustment of the yaw angle said takes place fully after the pitch angle has been adjusted.

Once a pitch maneuver has finished, a yaw maneuver is started, either simultaneously or after some time has elapsed after finishing the pitch maneuver.

In some examples, a first part of the adjustment of the yaw angle takes place while the pitch angle is being adjusted and a second part of the adjustment of the yaw angle takes place after the pitch angle has been adjusted.

A yaw maneuver starts prior to the end of a pitch maneuver, and the yaw maneuver ends after the end of the pitch maneuver. In some examples, the first part of the adjustment of the yaw angle starts together with or after start of the adjustment of the pitch angle.

In some examples, after adjusting the pitch angle of the at least one rotor blade, the pitch angle of the first rotor blade is between 80 and 100 degrees with respect to a reference axis or plane, and the pitch angle of the second rotor blade is at least 30 degrees less than the pitch angle of the first rotor blade.

This pitch angle configuration is convenient to dampen vibrations on the rotor blades, the wind rotor, the nacelle and the tower as at least one of the rotor blades is, in some examples, oriented or substantially oriented according to a wind direction, and at least one other of the rotor blades is at least partially transverse to the wind direction, thereby providing the wind rotor with stability even in presence of wind. The configuration is thus particularly convenient for situations in which the wind turbine does not produce or is not to produce electric power. A greater difference in pitch angle also improves such effect and, thus, in some examples, the pitch angle of the first rotor blade and the pitch angle of the second rotor blade differ by at least 45 degrees.

In some examples, the pitch angle is adjusted so that the pitch angle of a third rotor blade of the same wind turbine differs by at least 25 degrees with respect to the pitch angle of one of the first and second rotor blades and by not more than 5 degrees with respect to the pitch angle of the other one of the first and second rotor blades.

In some examples, the pitch angle of the third rotor blade differs, with respect to the pitch angle of the first rotor blade, by not more than 5 degrees. Further, the pitch angle of the third rotor blade differs, with respect to the pitch angle of the second rotor blade, by at least 25 degrees.

The aforesaid configurations further dampen vibrations on the rotor blades, the wind rotor, the nacelle and the tower, especially in situations in which the wind turbine does not produce or is not to produce electric power, thereby lengthening the life of the wind turbine.

In the latter case, for example, the pitch angle of the third rotor blade is between 75 and 105 degrees with respect to the reference axis or plane while the pitch angle of the first rotor blade is between 80 and 100 degrees with respect to the reference axis or plane.

In some examples, the difference in pitch angle of at least 25 degrees between the third rotor blade and one of the first and second rotor blades is a pitch angle difference of at least 30 degrees. Considering the previous example for the sake of clarity only, the pitch angle of the third rotor blade is between 80 and 100 degrees.

In some examples, adjusting of the pitch angle of the at least one rotor blade is started prior to a potential future non-operational period in which the wind turbine is in a state where yawing of the wind rotor is not possible.

Adjustment of at least one pitch angle of the wind rotor occurs prior to a potential future situation, particularly a potential future non-operational period including a wind turbine state that would make yawing not possible. The adjustment of the yaw of the wind rotor is also carried out prior to such potential future non-operational period, thereby avoiding a situation in which a certain yaw angle or position is desired for time periods in which no adjustments of the yaw are possible. In this sense, in some examples, upon detection of the potential future non-operational period including a wind turbine state that would make yawing not possible, the wind rotor is stopped and the adjusting of a pitch axis of one rotor blade is done so that the final pitch angle is, e.g., less than 45 degrees formed, for example, by the chord of the rotor blade with respect to a plane of the wind rotor disk, and then yawing of the wind rotor is performed in some of these examples, in particular to a predetermined yaw position.

In some examples, starting the adjusting of the pitch angle of the at least one rotor blade occurs at least 60 seconds prior to the potential future non-operational period. In some cases, the start of the adjustment occurs at least 90, or 120, or 240 seconds prior to the potential future non-operational period.

In some examples, the time between starting the adjustment of the pitch angle and the potential future non-operational period has a duration of at least the time it takes to adjust the yaw angle to the preferred yaw position, and in some cases more duration than that time. Accordingly, the start of the adjustment of the pitch angle and the start of the adjustment of the yaw angle occurs with sufficient time to reduce the likelihood, preferably avoid altogether, of not being able to adjust the yaw angle according to the preferred yaw position because the potential future non-operational period prevents so before concluding the yaw maneuver.

In some examples, the time between starting the adjustment of the pitch angle and the potential future non-operational period is computed.

The computation is based on, e.g., historical time duration values for carrying out the same or a similar yaw angle adjustment than that to be carried out, or an algorithm for calculating that time based on existing operating parameters.

In some examples, existence of the potential future non-operational period is determined.

One or more streams of data are processed to determine whether a future situation, which would benefit from changes in pitch of rotor blades and yaw of part of the wind turbine, may occur. By way of example, the one or more streams of data, which may have different sources include one or more of, e.g., meteorological data, grid data, wind turbine operation data, wind turbine maintenance data, to name a few.

For determination of the existence of the potential future non-operational period, one or more criteria may be set and, optionally, configured, which are then used for establishing whether the potential future non-operational period exists. Suitable criteria known in the art are possible; for example, the one or more criteria may include, e.g., one or more thresholds, one or more flags indicative of existence of a certain condition, etc. By way of example, the wind turbine maintenance data may be processed to find a flag indicative of upcoming onsite maintenance tasks, or that upcoming onsite maintenance tasks are to take place in a time not greater than a time threshold. By the same token, in another example, the grid data may include a flag indicative of a likely or expected service disruption. By way of yet another example, the meteorological data may be processed to identify a forecast of a highly probable low temperature condition in that is to take place in a time not greater than a time threshold.

In some examples, a probability of existence of the potential future non-operational period is determined.

In addition to determining whether a given future situation may occur, a probability representative of the likelihood of existence of the future situation is also determined. When the probability exceeds a threshold, for example, 80% or greater, or 90% or greater, etc., it is determined that the potential future non-operational period exists.

The probability is computed based on data that is included in the one or more streams of data. To name a few examples, weather forecasts may include a probability or confidence of the forecast, a planned maintenance task is expected to take place when operators are registered for the maintenance task, a probability of a bearing in a rotor of a wind turbine breaking increases progressively over time, etc.

In some examples, the preferred yaw position is determined.

A preferred yaw position may be calculated based on one or more streams of data. The preferred yaw position is preferably determined so as to bring both the wind rotor to a pitch configuration and a yaw angle or position that reduce or minimize the vibrations and/or loads exerted thereon and/or uneven loading thereon.

In some examples, the preferred yaw position is at least based on statistical wind direction data at the location or forecasted wind direction data at a location of the at least one wind turbine or a wind farm including the at least one wind turbine in a future time span.

The statistical wind direction data provides a single wind direction or a set of wind directions that are most likely to exist in the future time span. A single wind direction may be provided upon processing different possible wind directions and establishing which of the wind directions is most likely from a statistical standpoint.

The future time span encompasses, in some examples, a time period during which the potential future non-operational period is determined to exist in the future.

The forecast of wind direction is representative of the direction along which the wind is expected to blow when yawing is not possible. A preferred yaw position based on such forecasted wind direction might reduce the loads that the at least one wind turbine will be subjected to during the future time span.

In some examples, the statistical wind direction data and the forecasted wind direction data are based on a period of time in a year corresponding to a time of potential occurrence of the potential future non-operational period.

The wind direction typically varies depending on the time of the year (e.g., season, month, week, etc.) at each particular location. By considering when the potential future non-operational period may take place and using that time to establish the wind direction for the preferred yaw position, the loads exerted on the at least one wind turbine may be made smaller or less intense.

In some examples, the preferred yaw position is at least based on a duration of the potential future non-operational period.

Shorter or longer situations during which yawing is not possible might influence the determination of the preferred yaw position. In this sense, shorter situations may cause, for example, a determination of a preferred yaw position that is less optimal in terms of minimizing the loads exerted on the at least one wind turbine, as opposed to longer situations in which larger reduction of loads causes a more significant improvement on the useful life of the wind turbine or turbines.

In less long future situations, the reduction in mechanical stresses attained by yawing the wind rotor to a better but sub-optimal yaw angle or position allows a longer time in an operating mode for generation of electric power from wind.

In some examples, the preferred yaw position is selected from a plurality of preferred yaw positions based on the duration of the potential future non-operational period.

In some examples, the potential future non-operational period includes: maintenance stoppage of the at least one wind turbine, or commissioning of the at least one wind turbine, or existence of a grid loss of the at least one wind turbine, or existence of at least one predetermined weather condition or grid condition.

In some examples, adjusting pitch angle operations (i.e., pitch maneuvers) and/or adjusting yaw angle operations (i.e., yaw maneuvers) is/are triggered by at least one processor such as at least one wind turbine controller based on the determinations the at least one processor or controller makes according to the present disclosure. That is to say, the one or several adjusting angle operations may be triggered automatically.

In some examples, adjusting pitch angle operations and/or adjusting yaw angle operations is/are triggered by at least one user, e.g., through a user input means like, e.g., a keyboard, a touchscreen, a portable device, etc. For instance, when a wind turbine is in a pre-commissioning or commissioning state, personnel may manually digitally instruct the adjustment of a pitch angle and/or the adjustment of a yaw angle.

In some examples, a method according to the present disclosure is a computer-implemented method.

The method may run in one or more processors or controllers, in an isolated manner and/or in a distributed manner. That is to say, one, some or all steps may be run by a same processor or controller, or one or some steps may be run by one processor or controller and some other step or steps may be run by one or more other processors or controllers or even be run in distributed manner, which means that several processors or controllers cooperate to run one or more steps. In this sense, the steps are digitally run.

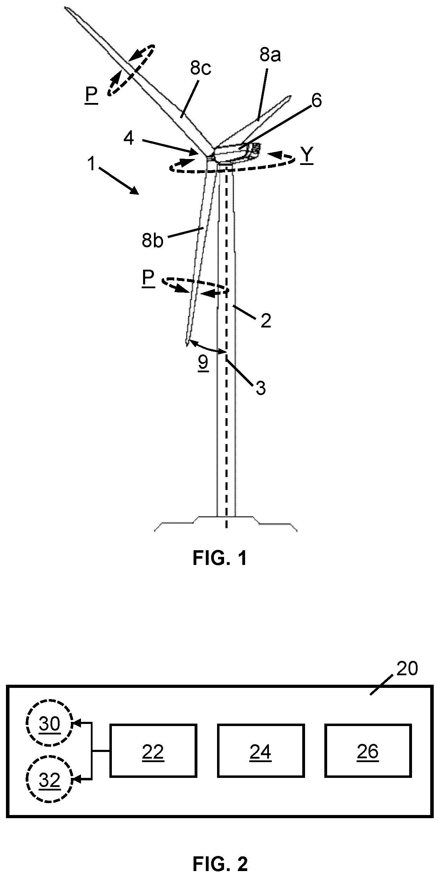

Figure 1 shows a wind turbine 1 in accordance with some examples.

The wind turbine 1 includes a tower 2, a nacelle 4 coupled with a wind rotor 6, the latter including a plurality of rotor blades 8a, 8b, 8c. Although not illustrated, the wind turbine 1 also includes a pitch drive system.

Upon controlling operation of the wind turbine 1, the wind rotor 6 may be oriented and reoriented according to a yaw direction Y, which may be within a horizontal plane and/or an azimuth direction, for example. The wind rotor 6 may be yawed with any suitable means known in the art, for example through the yawing of the nacelle 4 with a yaw system or alike. The pitch angle of each rotor blade 8a, 8b, 8c of the plurality of rotor blades may be adjusted, according to a pitch direction P, by means of the pitch drive system.

The pitching and yawing of the wind rotor 6 are convenient for, inter alia, orienting the rotor blades 8a, 8b, 8c so that production of electric power from wind is achieved. The pitching and/or yawing of the wind rotor 6 are also convenient for, in other occasions, orienting the wind rotor 6 and the rotor blades 8a, 8b, 8c to reduce vibrations on components thereof and/or on the tower 2.

In some examples, the pitch of at least one of the first rotor blade 8a and the second rotor blade 8b is adjusted during operation of the wind turbine 1. Namely, the pitch of one or both of the first and second rotor blades 8a, 8b is adjusted, depending on the preferred pitch position of each rotor blade 8a, 8b and the yaw of the wind rotor 6 prior to the adjustment. Upon completion of the pitch adjustment, the first rotor blade 8a has a pitch of, e.g., 90°, and the second rotor blade 8b has a pitch of, e.g., 60° or less (such as, e.g., 45° or less). In some examples, the second rotor blade 8b may be aligned or substantially aligned with an axis 3 of the tower 2, i.e., an angle 9 between the second rotor blade 8b, which is downwards, and the axis 3 is 15° or less.

Also, in some examples, like in Figure 1, the pitch of at least one of the first rotor blade 8a, second rotor blade 8b and third rotor blade 8c is adjusted during operation of the wind turbine 1. Namely, the pitch of one, two or all three of the first, second and third rotor blades 8a, 8b, 8c is adjusted, depending on the preferred pitch position of each rotor blade 8a, 8b, 8c and the yaw of the wind rotor 6 prior to the adjustment. Upon completion of the pitch adjustment, the first rotor blade 8a has a pitch of, e.g., approximately 90°, the second rotor blade 8b has a pitch of, e.g., approximately 60° or less (such as, e.g., 45° or less), and the third rotor blade 8c has a pitch of, e.g., approximately 90°. The second rotor blade 8b may be aligned or substantially aligned with an axis 3 of the tower 2, i.e., an angle 9 between the second rotor blade 8b, which is downwards, and the axis 3 is 15° or less.

Figure 2 shows a control system 20 for at least one wind turbine in accordance with some examples.

The control system 20 comprises at least one processor 22 and at least one memory 24. The at least one memory 24 is configured, together with the at least one processor 22, to at least implement a pitch maneuver 30 and a yaw maneuver 32 for one or more wind rotors, particularly, the wind rotor of one or more wind turbines. The control system 20 also comprises a data communications module 26 that enables transmission of, e.g., control commands for pitching, according to the pitch maneuver 30, rotor blades of a wind rotor, and for yawing, according to the yaw maneuver 32, the wind rotor. In some cases, the data communications module 26 also enables reception of, e.g., data streams, by way of one or more signals, with information for controlling operation of the at least one wind turbine. The one or more data streams received may relate to wind data, operational data (e.g., wind rotor speed data), maintenance data, grid status data, to name a few.

The pitch maneuver 30 causes adjustment of the pitch of one or more rotor blades of a wind rotor to be oriented in a specific manner, for example according to a preferred pitch position. The yaw maneuver 32 causes adjustment of the yaw of the wind rotor to be oriented in a specific manner, for example according to a preferred yaw position.

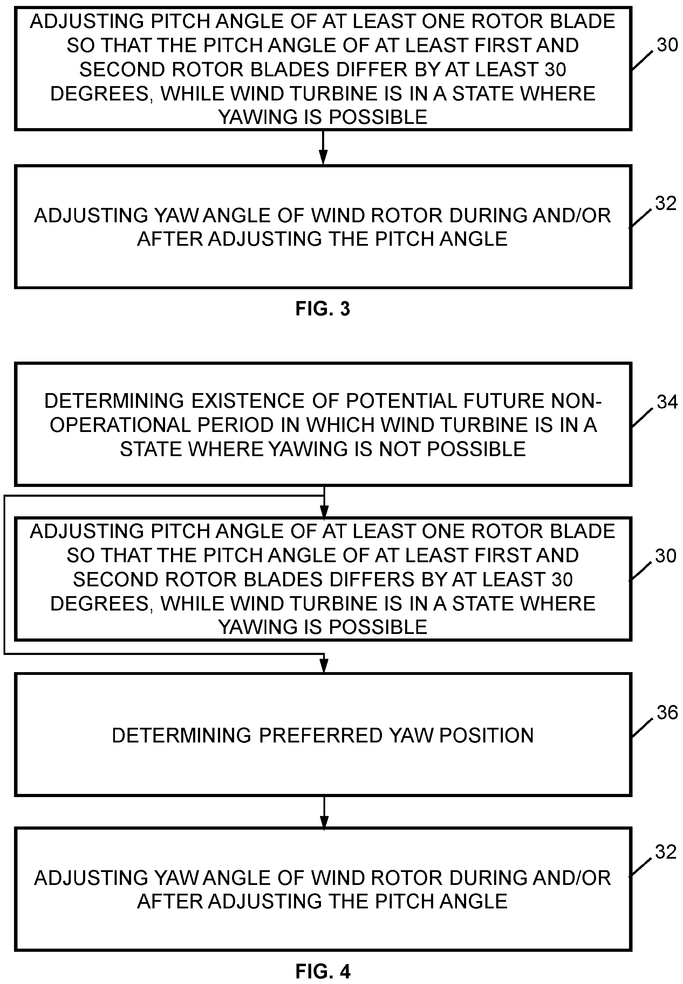

Figure 3 shows a method in accordance with some examples.

The method includes a step of adjusting a pitch angle 30 of at least one rotor blade of a plurality of rotor blades of a wind rotor so that a pitch angle difference between pitch angles of at least two rotor blades is at least 30 degrees. The adjusting of the pitch angle 30 is conducted at least when the wind turbine is in a state where yawing of the wind rotor is possible.

The method at least also includes a step of adjusting a yaw angle 32 of the wind rotor to a preferred yaw position. The adjusting of the yaw angle 32 is at least partially conducted during or after the adjusting of the pitch angle 30.

Figure 4 shows a method in accordance with some examples.

In addition to the adjusting of the pitch angle 30 and the adjusting of the yaw angle 32, the method at least also includes a step of determining 34 existence of a potential future non-operational period in which a wind turbine will be in a state where yawing is not possible.

The adjusting of the pitch angle 30 may be conducted when it is determined 34 that such potential future non-operational period exists and the time that said period is expected to start is close. For example, when the time to start said period is less than a predetermined time horizon, or before it is less than said predetermined time horizon, the adjusting of the pitch angle 30 is conducted.

Moreover, the method may also include a step of determining 36 the preferred yaw position for the adjusting of the yaw angle 32. For instance, the yaw position determined 36 is configured to reduce vibrations of the wind turbine and/or components thereof.

The adjusting of the yaw angle 32 may also be conducted when it is determined 34 that the potential future non-operational period exists and the time that said period is expected to start is close.

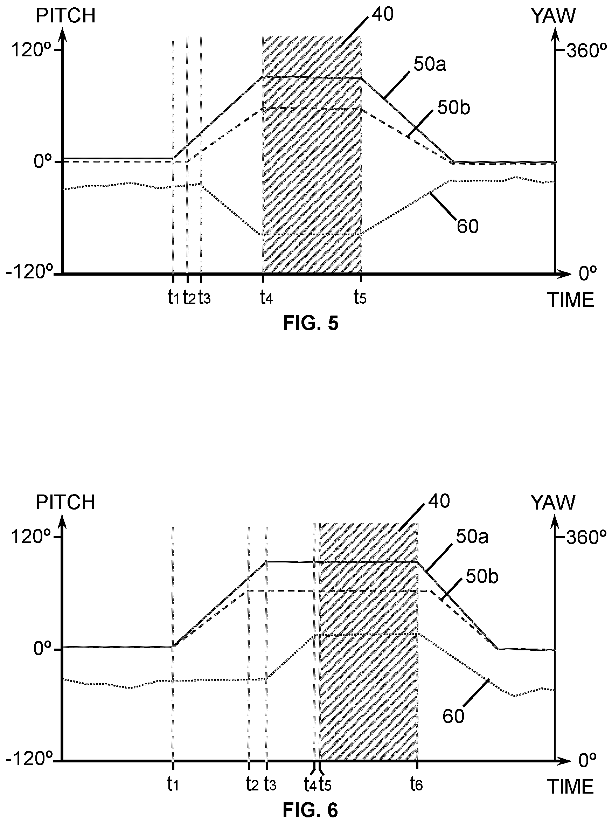

Figure 5 shows a graph diagrammatically illustrating pitch and yaw maneuvers of at least one wind turbine in accordance with some examples.

The graph represented shows a time evolution of pitch adjustments and yaw adjustments of a wind rotor of a wind turbine.

During the initial time represented, the pitch angle 50a, 50b of, e.g., a first rotor blade and a second rotor blade (it will be noted that further rotor blades may be comprised in a wind rotor and have made pitch angle adjustments) is maintained at a fixed value, even though it could be adjusted as well. The yaw angle 60 of the wind rotor may also have a fixed value, or like in this case, be adjusted, for example for orienting the wind rotor based on a wind direction to influence the generation of electric power.

At a certain time (at time t₁), while the wind turbine is still in a state in which yawing is possible, the pitch angle 50a, 50b of at least one rotor blade, in this case the pitch angle both the first and second rotor blades is adjusted, yet the adjustment of the pitch angle 50b of the second rotor blade starts later (at time t₂). At the end of the pitch angle 50a, 50b adjustment (at time t₄), the pitch angles 50a, 50b are such that there is a difference of at least thirty degrees between the two pitch angles 50a, 50b. In this example, the yaw angle 60 is also adjusted during this time, i.e., between t₁ and t₄, and the adjustment particularly starts at time t₃ in this example.

The cause for triggering the pitch angle 50a, 50b adjustment and the yaw angle 60 adjustment may be, for example, the determination of a potential future non-operational period 40 (for example, at time t₄) in which the wind turbine would be in a state where yawing of the wind rotor is not possible. Therefore, the pitch angle 50a, 50b and yaw angle 60 adjustments occur still in a state in which yawing of the wind rotor is possible.

In this example, between time t₄ and time t₅ there is a non-operational period 40 that precludes yawing of the wind rotor. Once the period 40 ends, further pitch angle 50a, 50b and yaw angle 60 adjustments are possible, for example but without limitation, to bring the wind rotor to a configuration intended to produce electric power or to maximize electric power production.

Figure 6 shows a graph diagrammatically illustrating pitch and yaw maneuvers of at least one wind turbine in accordance with some examples.

In this example, at time t₁, a pitch maneuver starts and adjusts the pitch angle 50a, 50b of at least two rotor blades so that, when the pitch maneuver ends (at time t₃, with the pitching of one of the rotor blades ending earlier, at time t₂), the angle difference between the two pitch angles 50a, 50b is thirty degrees or more (e.g., forty-five degrees or more). At time t₃, once the pitch maneuver has ended, a yaw maneuver starts and adjusts the yaw angle 60 of the wind rotor. The yaw maneuver ends at time t₄, prior to a potential future non-operational period 40 starting at time t₅.

After the non-operational period 40 has ended (at time t₆), further pitch maneuver(s) and yaw maneuver(s) may be carried out to further operate the wind turbine.

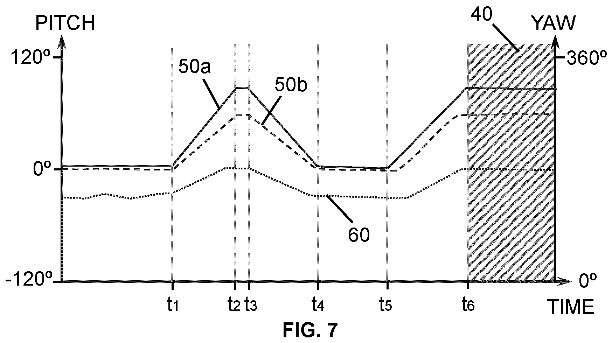

Figure 7 shows a graph diagrammatically illustrating pitch and yaw maneuvers of at least one wind turbine in accordance with some examples.

In this example, at time t₁ a pitch maneuver and a yaw maneuver are both started upon determining that a potential future situation, corresponding to a non-operational period 40 in which yawing of a wind rotor will not be possible or available, exists in the near future (e.g., starting at a time between time t₂ and time t₃). After both maneuvers have ended (at time t₂), bringing the pitch angle 50a, 50b of at least one rotor blade and the yaw angle 60 of the wind rotor to preferred pitch and yaw positions, the attained pitch and yaw are maintained. At a certain time, in this example time t₃, it is determined that the potential future non-operational period 40 does not actually occur. Accordingly, new pitch and/or yaw maneuvers may be carried out for further operation of the wind turbine. Both are carried out in this example, which are ended at time t₄.

Afterwards, a new potential future non-operational period 40 is determined to exist and, at time t₅, new pitch and yaw maneuvers are carried out to adjust pitch angles 50a, 50b and yaw angle 60. The maneuvers end by time t₆, when the non-operational period 40 starts and, thus, makes yawing of the wind rotor not possible.

In the examples of Figures 5 and 7, yaw maneuvers start during the pitch maneuver and end during the pitch maneuver or after the pitch maneuver has ended. In some other examples, yaw maneuvers start and end on or after a pitch maneuver has ended, like in the example of Figure 6.

It will be noted that the time axis of Figures 5, 6 and 7 does not accurately represent the time according to which the at least one wind turbine is operated. Generally, pitch and yaw maneuvers as described in the present disclosure last few seconds or few minutes (e.g., thirty seconds or less, two minutes or less, etc.), whereas non-operational periods 40 as shown in Figures 5, 6 and 7 tend to last much longer, e.g., two hours or more, ten hours or more, one day or more, four days or more, etc. The graphs of Figures 5, 6 and 7 are intended to show, in an illustrative manner, how pitch angle adjustments and yaw angle adjustments may be carried out.

Although some examples and embodiments may include a particular sequence of operations, the sequence may in some cases be altered without departing from the scope of the present disclosure. For example, some of the operations depicted may be performed in parallel or in a different sequence that does not materially affect the functions as described in the examples; by way of example, steps as described with reference to the methods of Figures 3 and 4, according to some examples, may not follow the sequence depicted in the figures. In other examples, different components of an example device or system that implements an example method may perform functions at substantially the same time or in a specific sequence.

As used herein, the terms "processing device" and "processor" may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. A processor may be emulated in software, running on a physical processor, as a virtual processor or virtual circuit. The virtual processor may behave like an independent processor but is implemented in software rather than hardware.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules/components that operate to perform one or more operations or functions. The modules/components referred to herein may, in some examples, include processor-implemented modules/components.

Similarly, the methods described herein may be at least partially processor-implemented. For example, at least some of the operations of a method may be performed by one or more processors or processor-implemented modules/components. The performance of certain of the operations may be distributed among the one or more processors, not only residing within a single machine, but deployed across a number of machines. In some examples, the processor or processors may be located in a single location, while in other examples the processors may be distributed across a number of locations.

Examples may be implemented in digital electronic circuitry, or in computer hardware, firmware, or software, or in combinations of them. Examples may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific example(s) and embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for reducing vibrations of a wind turbine (1), the wind turbine comprising a wind rotor (4) comprising at least a first rotor blade (8a) and a second rotor blade (8b), the method comprising:
adjusting (30) a pitch angle (50a,50b) of at least one rotor blade of the first and second rotor blades so that the pitch angle of the first rotor blade and the pitch angle of the second rotor blade differ by at least 30 degrees, wherein the adjusting of the pitch angle occurs when the wind turbine is in a state where yawing (Y) of the wind rotor is possible; and
adjusting (32) a yaw angle (60) of the wind rotor to a preferred yaw position, wherein the preferred yaw angle is at least partially adjusted during or after the adjusting (30) of the pitch angle.

2. The method of claim 1, wherein adjusting (30) the pitch angle (50a,50b) of the at least one rotor blade (8a-8c) comprises adjusting a first pitch angle (50a) of the first rotor blade (8a) and a second pitch angle (50b) of the second rotor blade (8b) so that the first and second pitch angles differ by at least 30 degrees.

3. The method of any one of the preceding claims, wherein the wind rotor (4) further comprises a third rotor blade (8c), and wherein adjusting (30) the pitch angle (50a,50b) of the at least one rotor blade (8a-8c) comprises adjusting a third pitch angle of said third rotor blade such that the third pitch angle differs from one of the first or second pitch angles (50a,50b) by at least 30 degrees and from the other one of the first and second pitch angles by not more than 5 degrees.

4. The method of any one of the preceding claims, wherein, after adjusting (30) the pitch angle of the at least one rotor blade (8a-8c), a first pitch angle (50a) of the first rotor blade (8a) is between 80 and 100 degrees with respect to a reference axis or plane, and a second pitch angle (50b) of the second rotor blade (8b) is at least 30 degrees less than the first pitch angle.

5. The method of any one of the preceding claims, wherein adjusting (30) of the pitch angle (50a,50b) of the at least one rotor blade (8a-8c) is started prior to a potential future non-operational period (40) in which the wind turbine (1) is in a state where yawing (Y) of the wind rotor (4) is not possible.

6. The method of claim 5, wherein a time between starting the adjusting (30) of the pitch angle (50a,50b) and the potential future non-operational period has a duration of at least the time it takes to adjust (32) the yaw angle (60) to the preferred yaw position.

7. The method of any one of claims 5-6, further comprising determining (34) existence of the potential future non-operational period (40).

8. The method of any one of claims 5-7, wherein the preferred yaw position is at least based on a duration of the potential future non-operational period (40).

9. The method of claim 8, wherein the preferred yaw position is selected from a plurality of preferred yaw positions based on the duration of the potential future non-operational period (40).

10. The method of any one of the preceding claims, wherein the preferred yaw position is at least based on statistical wind direction data at the location or forecasted wind direction data at a location of the wind turbine (1) or a wind farm comprising the wind turbine in a future time span.

11. A data processing device or system comprising means for carrying out the method of any one of the preceding claims.

12. A control system (20) for at least one wind turbine (1) comprising the data processing device or system of claim 11.

13. A wind turbine (1) comprising:
a wind rotor (4) comprising at least a first rotor blade (8a) and a second rotor blade (8b) with each rotor blade (8a-8c) of the wind rotor being rotatable about a pitch (P) axis for adjustment of a respective pitch angle (50a,50b) of the rotor blade;
a pitch drive system configured to adjust the pitch angle of each rotor blade of the wind rotor; and
the data processing device or system of claim 10 or the control system (20) of claim 11.

14. A wind farm comprising:
a plurality of wind turbines (1), each wind turbine comprising: a wind rotor (4) comprising at least a first rotor blade (8a) and a second rotor blade (8b) with each rotor blade (8a-8c) of the wind rotor being rotatable about a pitch (P) axis for adjustment of a respective pitch angle (50a,50b) of the rotor blade, and a pitch drive system configured to adjust the pitch angle of each rotor blade of the wind rotor; and
at least one data processing device or system according to claim 11 or control system (20) according to claim 12.

15. A computer program comprising instructions which, when the program is executed by at least one processing device, cause the at least one processing device to carry out the method of any one of the preceding claims.
